# EUROPEAN PATENT APPLICATION

(11) **EP 4 390 791 A1**
(43) Date of publication of application: **26.06.2024**
(21) Application number: 23213234.0
(22) Date of filing: 30.11.2023
(51) Int. Cl.: G06Q 10/04, G06Q 10/0631, G06Q 50/04

(54) **METHOD AND APPARATUS FOR OPTIMIZING CARBON EMISSIONS ASSOCIATED WITH AN OPERATION OF A PROCESSING PLANT**

(30) Priority: 20.12.2022 US 202263476259 P; 27.02.2023 US 202318175233
(71) Applicant: Honeywell International Inc., Charlotte, NC 28202 (US)
(72) Inventor: COPPERTHITE, Amanda, Charlotte, 28202 (US); COUCH, Keith Allen, Charlotte, 28202 (US)
(74) Representative: Haseltine Lake Kempner LLP

(57) **Abstract**

A computer-implemented method for optimizing carbon emissions associated with an operation of a processing plant is provided. The processing plant includes a plurality of assets and the computer-implemented method includes identifying a carbon output value associated with operating each asset of the plurality of assets of the processing plant and identifying an impact value associated with each asset of the plurality of assets. The method also includes generating an optimized set of transformation actions corresponding to the plurality of assets utilizing a multi-optimization model. The multi-optimization model is based at least in part on the carbon output value and the impact value.

## Description

### CROSS-REFERENCE TO RELATED APPLICATIONS

This application claims the benefit of U.S. Provisional Patent Application No. 63/476,259, filed December 20, 2022, the entire contents of which are incorporated by reference herein.

### TECHNICAL FIELD

The present application relates generally to a method and an apparatus for optimizing carbon emissions associated with an operation of a processing plant, such as a chemical processing plant or an oil refinery. More specifically, the present application relates to a method and an apparatus for generating an optimized set of transformation actions corresponding to a plurality of assets of the processing plant utilizing a multi-optimization model.

### BACKGROUND

Some processing plant implementations, such as chemical processing plants or oil refineries, operate assets that may emit, either directly or indirectly, greenhouse gases, such as carbon dioxide gas ("carbon emissions"). Reducing the cumulative carbon emissions associated with the operation of the assets and/or the operation of the processing plant may be desirable. Additionally, or alternatively, reducing the costs associated with the cumulative carbon emissions associated with the operation of the assets and/or the operation of the processing plant may be desirable.

Applicant has discovered problems with current implementations of methods for reducing the carbon emissions and/or reducing the costs associated with the carbon emissions of processing plants. Through applied effort, ingenuity, and innovation, many of these identified deficiencies and problems have been solved by developing solutions that are structured in accordance with the embodiments of the present disclosure, many examples of which are described in detail herein.

### BRIEF SUMMARY

In general, embodiments of the present disclosure provided herein include systems and apparatuses to provide for an improved method and apparatus for optimizing carbon emissions associated with an operation of a processing plant.

In various aspects, a computer-implemented method for optimizing carbon emissions associated with an operation of a processing plant is provided. The processing plant can include a plurality of assets and the computer-implemented method can include identifying a carbon output value associated with operating each asset of the plurality of assets of the processing plant. The computer-implemented method can further include identifying an impact value associated with each asset of the plurality of assets. The impact value associated with each asset can include a marginal abatement impact value associated with the asset, an operational impact value associated with operating the asset, and/or an asset alteration impact value associated with the asset.

In various examples, the computer-implemented method can further include generating an optimized set of transformation actions corresponding to the plurality of assets utilizing a multi-optimization model. The multi-optimization model can be based at least in part on the carbon output value associated with operating each asset of the plurality of assets and the impact value associated with each asset of the plurality of assets.

In various examples, an optimized cumulative carbon output value associated with the operations of the plurality of assets can be less than a current cumulative carbon output value associated with the plurality of assets and an optimized cumulative carbon output value can be further based at least in part on the optimized set of transformation actions. An optimized cumulative impact value associated with the operations of the plurality of assets can be less than a current cumulative asset impact value associated with the plurality of assets. The optimized cumulative impact value can be further based at least in part on the optimized set of transformation actions. Also, generating the optimized set of transformation actions over a long duration of time further includes minimizing the optimized cumulative impact value associated with the plurality of assets.

In various examples, the computer-implemented method can include identifying a carbon emissions goal value and the optimized cumulative carbon output value can be less than the carbon emissions goal value. The carbon emissions goal value can be based at least in part on a geographical location of the processing plant.

In various examples, the computer-implemented method can include determining the optimized cumulative carbon output value associated with the plurality of assets. Also, generating the optimized set of transformation actions can be in response to the optimized cumulative carbon output value exceeding a carbon emissions goal value. Generating the optimized set of transformation actions can be done in real-time or in near real-time with the determining the optimized cumulative carbon output value associated with the plurality of assets.

In various examples, the optimized set of transformation actions can include a transformation action to generate a schedule for installing, replacing, renewing, or modifying at least one asset of the plurality of assets. Also, the optimized set of transformation actions can include a first transformation action to generate a schedule for installing, replacing, renewing, or modifying a first asset of the plurality of assets and a second transformation action to generate a recommendation to install, replace, renew, or modify the first asset of the plurality of assets.

In various examples, the optimized set of transformation actions can include a transformation action to generate a recommendation to install, replace, renew, or modify at least one asset of the plurality of assets, a transformation action to automatically generate a work order to install, replace, renew, or modify at least one asset of the plurality of assets, a transformation action to convert received electricity to operate at least one asset of the plurality of assets from a non-renewable energy source to a renewable energy source, a transformation action to convert at least one asset of the plurality of assets to operate with green hydrogen, and/or a transformation action to obtain a carbon credit offset for an operation of at least one asset of the plurality of assets.

In various examples, the computer-implemented method of claim 1 can include performing at least one transformation action of the optimized set of transformation actions on at least one asset of the plurality of assets and generating a time stamp of when the at least one transformation action was performed on the at least one asset of the plurality of assets.

In various examples, generating the optimized set of transformation actions can include generating a first scenario for the optimized set of transformation actions in real-time or in near real-time with generating a second scenario for the optimized set of transformation actions. The first scenario can include a first transformation action associated with a first asset of the plurality of assets and the second scenario can include a second transformation action, different than the first transformation action, that can be associated with a second asset of the plurality of assets. The computer-implemented method can include performing the first transformation action or the second transformation action, but not both.

In various examples, generating the optimized set of transformation actions can include generating a first scenario for the optimized set of transformation actions in real-time or in near real-time with generating a second scenario for the optimized set of transformation actions. The first scenario can include a first transformation action associated with a first asset of the plurality of assets and the second scenario can include a second transformation action, different than the first transformation action, that can be associated with the first asset of the plurality of assets. The computer-implemented method can include performing the first transformation action or the second transformation action, but not both.

In various aspects, an apparatus includes at least one processor and at least one memory, which can include program code. The at least one memory and the program code can be configured to, with the at least one processor, cause the apparatus to receive or determine a carbon output value associated with operating each asset of a plurality of assets of a processing plant. Additionally, the at least one memory and the program code can be configured to, with the at least one processor, cause the apparatus to receive or determine an impact value associated with each asset of the plurality of assets. The impact value associated with each asset can include a marginal abatement impact value associated with the asset, an operational impact value associated with operating the asset, and/or an asset alteration impact value associated with the asset. The at least one memory and the program code can be configured to, with the at least one processor, cause the apparatus to generate an optimized set of transformation actions corresponding to the plurality of assets utilizing a multi-optimization model based at least in part on the carbon output value associated with operating each asset of the plurality of assets and the impact value associated with each asset of the plurality of assets. An optimized cumulative carbon output value associated with the operations of the plurality of assets can be less than a current cumulative carbon output value associated with the plurality of assets. The optimized cumulative carbon output value can be further based at least in part on the optimized set of transformation actions. An optimized cumulative impact value associated with the operations of the plurality of assets can be less than a current cumulative asset impact value associated with the plurality of assets. The optimized cumulative impact value can be further based at least in part on the optimized set of transformation actions.

In various examples, the at least one memory and the program code can be further configured to, with the at least one processor, cause the apparatus to receive or determine a carbon emissions goal value. The optimized cumulative carbon output value can be less than the carbon emissions goal value.

In various examples, the at least one memory and the program code can be further configured to, with the at least one processor, cause the apparatus to determine the optimized cumulative carbon output value associated with the plurality of assets. If the optimized cumulative carbon output value exceeds a carbon emissions goal value, the generation of the optimized set of transformation actions can be caused.

In various examples, the optimized set of transformation actions can include a first transformation action to generate a schedule for installing, replacing, renewing, or modifying a first asset of the plurality of assets and a second transformation action to generate a recommendation to install, replace, renew, or modify the first asset of the plurality of assets.

In various examples, the optimized set of transformation actions includes a transformation action to generate a recommendation to install, replace, renew, or modify at least one asset of the plurality of assets, a transformation action to automatically generate a work order to install, replace, renew, or modify at least one asset of the plurality of assets, a transformation action to convert received electricity to operate at least one asset of the plurality of assets from a non-renewable energy source to a renewable energy source, a transformation action to convert at least one asset of the plurality of assets to operate with green hydrogen, and/or a transformation action to obtain a carbon credit offset for an operation of at least one asset of the plurality of assets.

In various examples, the at least one memory and the program code can be further configured to, with the at least one processor, cause the apparatus to perform at least one transformation action of the optimized set of transformation actions on at least one asset of the plurality of assets and generate a time stamp of when the at least one transformation action was performed on the at least one asset of the plurality of assets.

In various examples, the at least one memory and the program code can be further configured to, with the at least one processor, cause the apparatus to generate a first scenario for the optimized set of transformation actions in real-time or in near real-time with generating a second scenario for the optimized set of transformation actions. The first scenario can include a first transformation action associated with a first asset of the plurality of assets, and the second scenario can include a second transformation action, different than the first transformation action, that can be associated with a second asset of the plurality of assets. The at least one memory and the program code can be further configured to perform the first transformation action or the second transformation action, but not both.

The above summary is provided merely for purposes of summarizing some example embodiments to provide a basic understanding of some aspects of the present disclosure. Accordingly, it will be appreciated that the above-described embodiments are merely examples and should not be construed to narrow the scope or spirit of the present disclosure in any way. It will be appreciated that the scope of the present disclosure encompasses many potential embodiments in addition to those here summarized, some of which will be further described below. Other features, aspects, and advantages of the subject matter will become apparent from the description, the drawings, and the claims.

### BRIEF DESCRIPTION OF THE DRAWINGS

Having thus described certain example embodiments of the present disclosure in general terms above, non-limiting and non-exhaustive embodiments of the subject disclosure are described with reference to the following figures, which are not necessarily drawn to scale and wherein like reference numerals refer to like parts throughout the various views unless otherwise specified. The components illustrated in the figures may or may not be present in certain embodiments described herein. Some embodiments may include fewer (or more) components than those shown in the figures.
FIG. 1 illustrates a block diagram of a system that may be specially configured within which embodiments of the present disclosure may operate.
FIG. 2 illustrates a block diagram of an example apparatus that may be specially configured in accordance with an example embodiment of the present disclosure.
FIG. 3 illustrates a flow chart of a method for optimizing carbon emissions associated with an operation of a processing plant in accordance with an example embodiment of the present disclosure.
FIG. 4 illustrates a flow chart of a method for optimizing carbon emissions associated with an operation of a processing plant in accordance with an example embodiment of the present disclosure.
FIG. 5 illustrates a flow chart of a method for optimizing carbon emissions associated with an operation of a processing plant in accordance with an example embodiment of the present disclosure.
FIG. 6 illustrates an implementation of the method of FIG. 3 for optimizing carbon emissions associated with an operation of a processing plant in accordance with an example embodiment of the present disclosure.
FIG. 7 illustrates an implementation of the method of FIG. 3 for optimizing carbon emissions associated with an operation of a processing plant in accordance with an example embodiment of the present disclosure.

### DETAILED DESCRIPTION

Embodiments of the present disclosure now will be described more fully hereinafter with reference to the accompanying drawings, in which some, but not all, embodiments of the disclosure are shown. Indeed, embodiments of the disclosure may be embodied in many different forms and should not be construed as limited to the embodiments set forth herein, rather, these embodiments are provided so that this disclosure will satisfy applicable legal requirements. Like numbers refer to like elements throughout.

### Definitions

As used herein, the term "exemplary" means serving as an example, instance, or illustration. Any aspect or design described herein as "exemplary" is not necessarily to be construed as preferred or advantageous over other aspects or designs. Rather, use of the word exemplary is intended to present concepts in a concrete fashion. In addition, while a particular feature may be disclosed with respect to only one of several implementations, such feature may be combined with one or more other features of the other implementations as may be desired and advantageous for any given or particular application. Furthermore, to the extent that the terms "includes" and "including" and variants thereof are used in either the detailed description or the claims, these terms are intended to be inclusive in a manner similar to the term "comprising."

As used herein, the term "or" is intended to mean an inclusive "or" rather than an exclusive "or". That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. In addition, the articles "a" and "an" as used in this application and the appended claims should generally be construed to mean "one or more" unless specified otherwise or clear from context to be directed to a singular form.

As used herein, the term "processing plant" refers to any building, complex, system, and/or arrangement of assets that perform a chemical, physical, electrical, or mechanical process for converting input ingredient(s) into one or more output product(s). Non-limiting examples of a processing plant include a chemical processing plant, such as a petrochemical processing plant and an oil refinery.

As used herein, the term "system" refers to, or includes, a computer-related entity or an entity related to an operational apparatus with one or more specific functionalities, wherein the entity can be either hardware, a combination of hardware and software, software, or software in execution. As an example, a system may be, but is not limited to being, a process running on a processor, a processor, an object, an executable, a thread of execution, computer-executable instructions, a program, and/or a computer. By way of illustration and not limitation, both an application running on a server and the server can be a system.

As used herein, the term "asset" refers to a machine, a tank, a pipe, an electric device, equipment, or any other physical structure or object within or associated with a processing plant that is utilized in or in support of a process performed by the processing plant. In an example context of an oil refinery plant, non-limiting examples of an asset include a storage tank, a boiler, a furnace (e.g., a hot salt furnace or a high frequency furnace), a light bulb, a lighting system, an HVAC system, an electric motor, an electric battery, a spar dryer, a blender, a product tank, a catalyst, a reactor, a carbon capture system, a combustor, a pump, a computer, a server computer, a heat exchanger, a pressure vessel, a pipe or piping system, a connector, and a valve.

As used herein, the term "renewable energy source" means a source that will easily replenish over time and the term "non-renewable energy source" means a source that will not be easily replenished over time. For example, a renewable energy source can include renewable electricity sources, such as solar energy, hydropower energy, and wind energy, and renewable fuel sources, such as green hydrogen fuel and biofuels. A non-renewable energy source can include non-renewable electricity sources, such as coal power, and non-renewable fuel sources, such as petroleum or gray hydrogen fuel.

As used herein, the term "real-time" refers to a first action being performed instantaneously, or almost instantaneously but for minor signal processing and/or transmission delays, with a second action. For example, a first action that is performed within one second of a second action being performed is performed in real-time with the second action. As used herein, the term "near real time" refers to a first action being performed as delayed based at least in part on an intermediary delay interval and performed within a certain time frame of the second action being performed, but the first action and the second action are not performed instantaneously. For example, a first action that is performed within a day, such as within an hour, such as within a minute of a second action being performed is performed in near real-time with the second action.

### Overview

In various examples, a processing plant is utilized to create one or more particular products. A processing plant can be an oil refinery that processes various input ingredients to create one or more types of oil-based products. Processing plants may operate a plurality of assets to produce, or facilitate the production of, the one or more products. The operation of the assets may emit carbon dioxide (CO2) and other various greenhouse gases (e.g., methane, nitrous oxide, or fluorinated gases). CO2 is the primary greenhouse gas that is emitted through human activities. As such, it may be desirable to reduce the amount of CO2 gas ("carbon emissions") emitted by human activity, such as the amount of carbon emissions emitted by the processing plant, either directly or indirectly.

Various ways of reducing the amount of carbon emissions directly emitted by a processing plant exist. For example, diesel-powered equipment can be replaced with electric-powered equipment or carbon capture technologies can be installed on equipment to reduce the amount of carbon emissions that are emitted from the equipment.

Various ways of reducing the amount of carbon emissions that are not directly emitted by the processing plant, but are associated with the processing plant exist. In other words, various ways of reducing the amount of carbon emissions that are indirectly emitted by the processing plant exist. For example, energy (e.g., electricity or fuel) that is obtained from a non-renewable energy source (e.g., fossil fuels such as coal or gray hydrogen) can instead be obtained from a renewable energy source (e.g., wind, solar, or green hydrogen). In various examples, carbon offset products, such as carbon credits, can be obtained (e.g., purchased or allocated) to reduce the amount of carbon emissions that are associated with the processing plant. In the example of carbon offset products, the direct amount of carbon emissions that are directly emitted by the processing plant may remain unchanged. However, by obtaining the carbon offset products, a net amount of carbon emissions associated with the processing plant is reduced because a net amount of carbon emissions that are indirectly emitted by the processing plant is reduced because of the obtainment of, and/or the association with, the carbon offset product.

Processing plants often have a goal to reduce a net amount of carbon emissions associated with the processing plant (e.g., the amount of carbon emissions directly or indirectly emitted by the processing plant). For example, some processing plants have a goal to reduce a net amount of carbon emissions associated with the processing plant below a carbon emissions goal value, which can be a threshold value, such as a predetermined threshold value. The carbon emissions goal value can be determined by a government agency or by the company that owns the processing plant. In some instances, the carbon emissions goal value may be a net zero carbon emissions goal. In various examples, the carbon emissions goal value may be associated with a time frame. For example, the carbon emissions goal value may be to achieve the net zero carbon emissions within ten years.

However, reducing carbon emissions and/or achieving the carbon emissions goal value may be expensive. As such, it may be beneficial to determine what transformation actions to perform to reduce or minimize an impact value associated with the assets and/or to reduce carbon emissions and/or to achieve the carbon emissions goal value, which will be discussed in greater detail, below. As will be explained further, a "transformation action" can be, can be representative of, or can initiate an action that, if taken, may, or is expected to, reduce the carbon output value associated with operating a particular asset of the plurality of assets or of the processing plant and/or may reduce the impact value associated with the particular asset of the plurality of assets or the processing plant.

As used herein, the term "impact value" refers to or includes various costs associated with the particular asset. For example, the impact value for an asset can include a marginal abatement impact value, which can be, or can include, a marginal abatement cost for the asset. The marginal abatement cost can be the cost of reducing carbon emissions and the unit of measurement can be dollars per metric tons of carbon dioxide equivalent ($/MTCO2e). The impact value can include an operational impact value, which can be, or can include, an operational cost for the asset. The operational cost for the asset can be the cost to operate the asset in a certain time period (e.g., cost to operate the asset for a year). The impact value can include an asset alteration impact value, which can be, or can include, an asset alteration cost that is associated with the asset. The asset alteration cost can be, or can include, the cost to install, modify, replace, or renew the asset. The impact value can include various other factors or costs, such as loss of opportunity costs, reputational costs, or government-imposed fees. As will be explained further, the asset alteration impact value may be, or include, a cost associated with performing a transformation action, or an action associated therewith, on the asset.

As will be recognized, processing plants may have a great number of assets (e.g., more than one hundred assets, such as more than one thousand assets, such as more than ten thousand assets). As such, determining which assets to transform to reduce or minimize an impact value associated with the assets while also reducing carbon emissions and/or achieving the carbon emissions goal value is impossible to do with the human mind and/or with existing methods. In this regard, embodiments of the present disclosure provide for an improved method for reducing carbon emissions associated with an operation of a processing plant or reducing an impact value associated with the operation of the processing plant. Also, various embodiments of the present disclosure operate the processing plant in an improved and optimized manner over existing operation of the processing plant.

### Example Systems and Apparatuses of the Disclosure

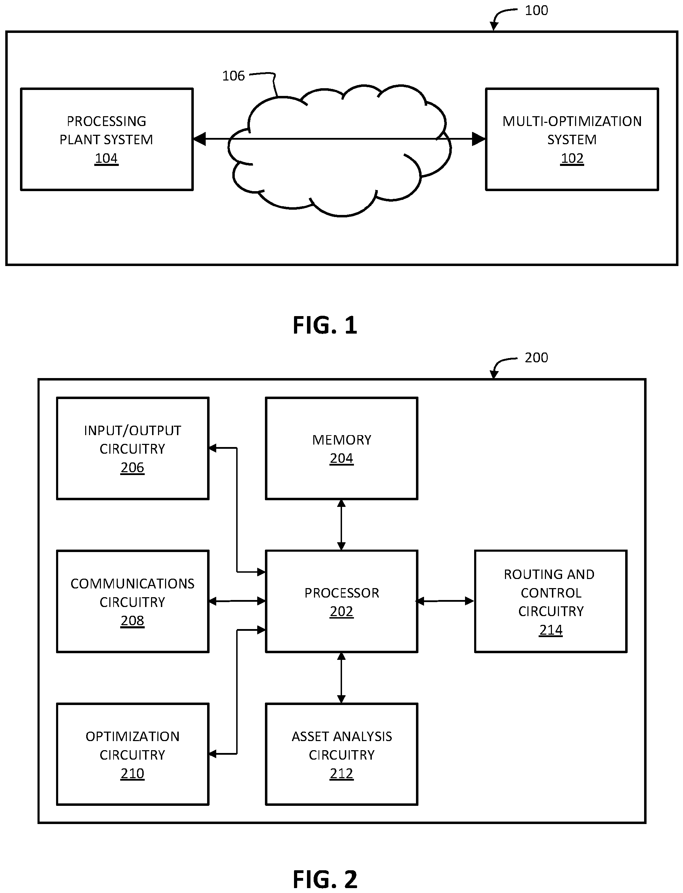

FIG. 1 illustrates a block diagram of a system that may be specially configured within which embodiments of the present disclosure may operate. Specifically, FIG. 1 depicts an example system 100. As illustrated, the system 100 includes a multi-optimization system 102 in communication with a processing plant system 104. In some embodiments, the multi-optimization system 102 is embodied by or as a sub-system of the processing plant system 104. In some embodiments, the multi-optimization system 102 communicates with the processing plant system 104 over one or more communication network(s), for example a communications network 106. In various examples, the processing plant system 104 is a distributed control system (DCS).

It should be appreciated that the communications network 106 in some embodiments is embodied in any of a myriad of network configurations. In some embodiments, the communications network 106 embodies a public network, such as the Internet. In some embodiments, the communications network 106 embodies a private network (e.g., an internal localized, or closed-off network between particular devices). In some other embodiments, the communications network 106 embodies a hybrid network (e.g., a network enabling internal communications between particular connected devices and external communications with other devices). The communications network 106 in some embodiments includes one or more base station(s), relay(s), router(s), switch(es), cell tower(s), communications cable(s) and/or associated routing station(s), and/or the like. In some embodiments, the communications network 106 includes one or more user-controlled computing device(s) (e.g., a user-owned router and/or modem) and/or one or more external utility devices (e.g., Internet service provider communication tower(s) and/or other device(s)).

Each of the components of the system 100 are communicatively coupled to transmit data to and/or receive data from one another over the same or different wireless and/or wired networks embodying the communications network 106. Such configuration(s) include, without limitation, a wired or wireless Personal Area Network (PAN), Local Area Network (LAN), Metropolitan Area Network (MAN), Wide Area Network (WAN), and/or the like. Additionally, while FIG. 1 illustrates certain system entities as separate, standalone entities communicating over the communications network 106, the various embodiments are not limited to this architecture. In other embodiments, one or more computing entities share one or more components, hardware, and/or the like, or otherwise are embodied by a single computing device such that connection(s) between the computing entities are over the communications network 106 and/or rendered unnecessary. For example, in some embodiments, the processing plant system 104 includes some or all of the multi-optimization system 102, such that an external communications network 10 is not required.

In some embodiments, the multi-optimization system 102 and the processing plant system 104 are embodied in an on-premises system within or associated with the processing plant. In some such embodiments, the multi-optimization system 102 and the processing plant system 104 are communicatively coupled via at least one wired connection. Alternatively or additionally, in some embodiments, the processing plant system 104 embodies or includes the multi-optimization system 102, for example as a software component of a single enterprise terminal.

The processing plant system 104 includes any number of computing device(s), system(s), asset(s), and/or the like, that facilitate the production of any number of products, for example utilizing particular configurations that cause processing of particular ingredients available within the processing plant system 104. In some embodiments, the processing plant system 104 includes one or more asset(s), connection(s) between physical asset(s), and/or computing system(s) that control operation of each asset therein. In one example context, the processing plant system 104 embodies an oil refinery, which includes asset(s) embodying rundown blender(s), batch blender(s), product tank(s), boilers, catalytic combustors, carbon capture systems, or other asset(s) that perform particular process(es), or support those process(es), to alter properties of inputs to the asset, crude flow unit(s), piping between such physical asset(s), valve(s) controlling flow between the physical asset(s), and/or the like. Additionally or alternatively, in some embodiments the processing plant system 104 includes one or more computing system(s) that are specially configured to operate the asset(s) in a manner that produces one or more particular product(s) simultaneously. In some embodiments, a processing plant system 104 includes one or more computing device(s) and/or system(s) embodied in hardware, software, firmware, and/or a combination thereof, that configure and/or otherwise control operation of one or more physical asset(s) of the processing plant. For example, in some embodiments, such computing device(s) and/or system(s) include one or more programmable logic controller(s), MPC(s), application server(s), centralized control system(s), and/or the like, that control(s) configuration and/or operation of at least one physical asset. It will be appreciated that different processing plant system(s) may include or otherwise be associated with different asset(s), computing system(s), and/or the like. For example, different refinery plants may include different assets, different number of assets, different types of assets, and/or the like, that cause the processing plant system to operate differently from other processing plants.

The multi-optimization system 102 includes one or more computing device(s) and/or system(s) embodied in hardware, software, firmware, and/or a combination thereof, that generate one or more optimized set(s) of transformation actions, each of the one or more optimized set(s) of transformation actions including one or more transformation action(s).

In some embodiments, the multi-optimization system 102 and the processing plant system 104 communicate with one another to perform the various actions described herein. For example, in some embodiments, the multi-optimization system 102 and the processing plant system 104 communicate to generate, and/or transmit for use, one or more transformation actions associated with operation of a particular processing plant and/or a particular asset thereof. Additionally or alternatively, in some embodiments, the multi-optimization system 102 and the processing plant system 104 communicate to facilitate control or adjustment of operation of assets of the processing plant based at least in part on the generated one or more transformation actions. For example, in some embodiments, the multi-optimization system 102 and processing plant system 104 communicate to configure one or more asset(s), such as boilers(s), of the processing plant to reduce the carbon output value associated with operating the plurality of assets. In some embodiments, the multi-optimization system 102 and processing plant system 104 communicate to configure the processing plant to reduce a cumulative carbon output value associated with the plurality of assets and/or the processing plant.

FIG. 2 illustrates a block diagram of an example apparatus that may be specially configured in accordance with an example embodiment of the present disclosure. Specifically, FIG. 2 depicts an example multi-optimization apparatus 200 ("apparatus 200") specially configured in accordance with at least some example embodiments of the present disclosure. In some embodiments, the multi-optimization system 102 and/or a portion thereof is embodied by one or more system(s), for example embodied by the apparatus 200 as depicted and described in FIG. 2. The apparatus 200 includes processor 202, memory 204, input/output circuitry 206, communications circuitry 208, optimization circuitry 210, asset analysis circuitry 212, and/or routing and control circuitry 214. In some embodiments, the apparatus 200 is configured, using one or more of the sets of circuitry 202, 204, 206, 208, 210, 212, and/or 214, to execute and perform the operations described herein.

In general, the terms computing entity (or "entity" in reference other than to a user), device, system, and/or similar words used herein interchangeably may refer to, for example, one or more computers, computing entities, desktop computers, mobile phones, tablets, phablets, notebooks, laptops, distributed systems, items/devices, terminals, servers or server networks, blades, gateways, switches, processing devices, processing entities, set-top boxes, relays, routers, network access points, base stations, the like, and/or any combination of devices or entities adapted to perform the functions, operations, and/or processes described herein. Such functions, operations, and/or processes may include, for example, transmitting, receiving, operating on, processing, displaying, storing, determining, creating/generating, monitoring, evaluating, comparing, and/or similar terms used herein interchangeably. In one embodiment, these functions, operations, and/or processes can be performed on data, content, information, and/or similar terms used herein interchangeably. In this regard, the apparatus 200 embodies a particular, specially configured computing entity transformed to enable the specific operations described herein and provide the specific advantages associated therewith, as described herein.

Although components are described with respect to functional limitations, it should be understood that the particular implementations necessarily include the use of particular computing hardware. It should also be understood that in some embodiments certain of the components described herein include similar or common hardware. For example, in some embodiments two sets of circuitry both leverage use of the same processor(s), network interface(s), storage medium(s), and/or the like, to perform their associated functions, such that duplicate hardware is not required for each set of circuitry. The use of the term "circuitry" as used herein with respect to components of the apparatuses described herein should therefore be understood to include particular hardware configured to perform the functions associated with the particular circuitry as described herein.

Particularly, the term "circuitry" should be understood broadly to include hardware and, in some embodiments, software for configuring the hardware. For example, in some embodiments, "circuitry" includes processing circuitry, storage media, network interfaces, input/output devices, and/or the like. Alternatively or additionally, in some embodiments, other elements of the apparatus 200 provide or supplement the functionality of another particular set of circuitry. For example, the processor 202 in some embodiments provides processing functionality to any of the sets of circuitry, the memory 204 provides storage functionality to any of the sets of circuitry, the communications circuitry 208 provides network interface functionality to any of the sets of circuitry, and/or the like.

In some embodiments, the processor 202 (and/or co-processor or any other processing circuitry assisting or otherwise associated with the processor) is/are in communication with the memory 204 via a bus for passing information among components of the apparatus 200. In some embodiments, for example, the memory 204 is non-transitory and may include, for example, one or more volatile and/or non-volatile memories. In other words, for example, the memory 204 in some embodiments includes or embodies an electronic storage device, such as a computer readable storage medium. In some embodiments, the memory 204 is configured to store information, data, content, applications, instructions, or the like, for enabling the apparatus 200 to carry out various functions in accordance with example embodiments of the present disclosure.

The processor 202 may be embodied in a number of different ways. For example, in some example embodiments, the processor 202 includes one or more processing devices configured to perform independently. Additionally or alternatively, in some embodiments, the processor 202 includes one or more processor(s) configured in tandem via a bus to enable independent execution of instructions, pipelining, and/or multithreading. The use of the terms "processor" and "processing circuitry" should be understood to include a single core processor, a multi-core processor, multiple processors internal to the apparatus 200, and/or one or more remote or "cloud" processor(s) external to the apparatus 200.

In an example embodiment, the processor 202 is configured to execute instructions stored in the memory 204 or otherwise accessible to the processor. Alternatively or additionally, the processor 202 in some embodiments is configured to execute hard-coded functionality. As such, whether configured by hardware or software methods, or by a combination thereof, the processor 202 represents an entity (e.g., physically embodied in circuitry) capable of performing operations according to an embodiment of the present disclosure while configured accordingly. Alternatively or additionally, as another example in some example embodiments, when the processor 202 is embodied as an executor of software instructions, the instructions specifically configure the processor 202 to perform the algorithms embodied in the specific operations described herein when such instructions are executed.

As one particular example embodiment, the processor 202 is configured to perform various operations associated with the plurality of assets of a processing plant and/or with the processing plant. In some embodiments, the processor 202 includes hardware, software, firmware, and/or a combination thereof, that generates at least one optimized set of transformation actions utilizing a multi-optimization model. Additionally or alternatively, in some embodiments, the processor 202 includes hardware, software, firmware, and/or a combination thereof, that causes modification, such as automatic modification, of an operation of an asset of the processing plant based at least in part on the optimized set of transformation actions. Additionally or alternatively, in some embodiments, the processor 202 includes hardware, software, firmware, and/or a combination thereof, that generates, such as automatically generates, a schedule for installing, replacing, or modifying at least one asset of the plurality of assets. Additionally or alternatively, in some embodiments, the processor 202 includes hardware, software, firmware, and/or a combination thereof, that generates, such as automatically generates, a work order for installing, replacing, or modifying at least one asset of the plurality of assets. Additionally or alternatively, in some embodiments, the processor 202 includes hardware, software, firmware, and/or a combination thereof, that obtains, such as automatically obtains, a carbon offset product, such as a carbon credit, for operation of the plurality of assets and/or for operation of the processing plant.

In some embodiments, the apparatus 200 includes input/output circuitry 206 that provides output to the user and, in some embodiments, to receive an indication of a user input. In some embodiments, the input/output circuitry 206 is in communication with the processor 202 to provide such functionality. The input/output circuitry 206 may comprise one or more user interface(s) and in some embodiments includes a display that comprises the interface(s) rendered as a web user interface, an application user interface, a user device, a backend system, or the like. In some embodiments, the input/output circuitry 206 also includes a keyboard, a mouse, a joystick, a touch screen, touch areas, soft keys a microphone, a speaker, or other input/output mechanisms. The processor 202 and/or input/output circuitry 206 comprising the processor may be configured to control one or more functions of one or more user interface elements through computer program instructions (e.g., software and/or firmware) stored on a memory accessible to the processor (e.g., memory 204, and/or the like). In some embodiments, the input/output circuitry 206 includes or utilizes a user-facing application, for example provided to a client side device, to provide input/output functionality to the client device and/or other display associated with a user. In some examples, the input/output circuitry is configured to receive or determine a carbon output value associated with operating plurality of assets of the processing plant, an impact value associated with operating plurality of assets of the processing plant, and/or a carbon emissions goal value associated with operating the processing plant or plurality of assets associated therewith. In some examples, the input/output circuitry is configured to output (e.g., transmit or display) an optimized set of transformation actions corresponding to a plurality of asset(s) of the processing plant and/or a schedule for each of the transformation actions within the optimized set of transformation actions.

In some embodiments, the apparatus 200 includes communications circuitry 208. The communications circuitry 208 includes any means such as a device or circuitry embodied in either hardware or a combination of hardware and software that is configured to receive and/or transmit data from/to a network and/or any other device, circuitry, or module in communication with the apparatus 200. In this regard, in some embodiments the communications circuitry 208 includes, for example, a network interface for enabling communications with a wired or wireless communications network. Additionally or alternatively in some embodiments, the communications circuitry 208 includes one or more network interface card(s), antenna(s), bus(es), switch(es), router(s), modem(s), and supporting hardware, firmware, and/or software, or any other device suitable for enabling communications via one or more communications network(s). Additionally or alternatively, the communications circuitry 208 includes circuitry for interacting with the antenna(s) and/or other hardware or software to cause transmission of signals via the antenna(s) or to handle receipt of signals received via the antenna(s). In some embodiments, the communications circuitry 208 enables transmission to and/or receipt of data from user device, one or more asset(s) or accompanying sensor(s) , and/or other external computing device in communication with the apparatus 200.

The optimization circuitry 210 includes hardware, software, firmware, and/or a combination thereof, that supports performance of at least one optimization process for a processing plant. For example, in some embodiments, the optimization circuitry 210 includes hardware, software, firmware, and/or a combination thereof, that generates an optimized set of transformation actions corresponding to a plurality of assets of the processing plant, such as a processing plant embodying or including an oil refinery. Additionally or alternatively, in some embodiments, the optimization circuitry 210 includes hardware, software, firmware, and/or a combination thereof, that generates the optimized set of transformation actions utilizing a multi-optimization model based at least in part on a carbon output value associated with operating each asset of the plurality of assets and an asset impact value associated with each asset of the plurality of assets. In some embodiments, the optimization circuitry 210 includes a separate processor, specially configured field programmable gate array (FPGA), or a specially programmed application specific integrated circuit (ASIC).

The asset analysis circuitry 212 includes hardware, software, firmware, and/or a combination thereof, that collects data representing particular aspect(s) of an asset and/or performs particular determinations based on such data based at least in part on such data representing the particular aspect(s). For example, in some embodiments, the asset analysis circuitry 212 includes hardware, software, firmware, and/or a combination thereof, that collects carbon output data, such as carbon output values, associated with a particular asset of a processing plant. In some such embodiments, the optimization circuitry 210 includes one or more sensor(s) that are configured to collects sensor data representing at least a portion of the carbon output data associated with operating one or more asset of the processing plant. Additionally or alternatively, in some embodiments, the asset analysis circuitry 212 includes hardware, software, firmware, and/or a combination thereof, that determines whether a cumulative carbon output value associated with a plurality of assets is below a carbon emissions goal value. Additionally or alternatively, in some embodiments, the asset analysis circuitry 212 includes hardware, software, firmware, and/or a combination thereof, that determines whether a cumulative carbon output value associated with an optimized plurality of assets is below a carbon emissions goal value. Additionally or alternatively, in some embodiments, the asset analysis circuitry 212 includes hardware, software, firmware, and/or a combination thereof, that determines whether a cumulative carbon output value associated with an optimized plurality of assets is less than a cumulative carbon output value associated with an optimized plurality of assets is below a carbon emissions goal value. In some embodiments, the asset analysis circuitry 212 includes a separate processor, specially configured field programmable gate array (FPGA), or a specially programmed application specific integrated circuit (ASIC).

The routing and control circuitry 214 includes hardware, software, firmware, and/or a combination thereof, that supports operation of one or more asset(s) of a processing plant based at least in part on generated, received, and/or determined data. For example, in some embodiments, routing and control circuitry 214 includes hardware, software, firmware, and/or a combination thereof, that causes or supports production of a product via at least one asset of a processing plant. In some such embodiments, the routing and control circuitry 214 includes hardware, software, firmware, and/or a combination thereof, that causes operation or modifies operation of one or more asset(s) of a processing plant, to cause or modify production of a particular product based at least in part on at least one transformation action of an optimized set of transformation actions. Additionally or alternatively, in some embodiments, routing and control circuitry 214 includes hardware, software, firmware, and/or a combination thereof, that causes the conversion, such as automatic conversion, of an energy source from a non-renewable energy source to a renewable energy source. Additionally or alternatively, in some embodiments, routing and control circuitry 214 includes hardware, software, firmware, and/or a combination thereof that causes the obtainment, such as automatic obtainment, of carbon offset products for the processing plant and/or the operation of the plurality of assets of the processing plant. In some embodiments, the routing and control circuitry 214 includes a separate processor, specially configured field programmable gate array (FPGA), or a specially programmed application specific integrated circuit (ASIC).

Additionally or alternatively, in some embodiments, two or more of the sets of circuitries 202-214 are combinable. Alternatively or additionally, in some embodiments, one or more of the sets of circuitry perform some or all of the functionality described associated with another component. For example, in some embodiments, two or more of the sets of circuitry 202-214 are combined into a single module embodied in hardware, software, firmware, and/or a combination thereof. Similarly, in some embodiments, one or more of the sets of circuitry, for example the optimization circuitry 210, asset analysis circuitry 212, and/or routing and control circuitry 214, is/are combined with the processor 202, such that the processor 202 performs one or more of the operations described above with respect to each of these sets of circuitry 210-214.

### Example Methods of the Disclosure

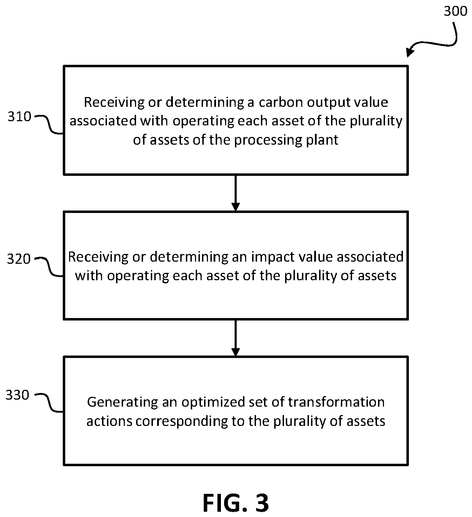

FIG. 3 illustrates a flow chart of a method 300 for optimizing carbon emissions associated with an operation of a processing plant that includes a plurality of assets in accordance with an example embodiment of the present disclosure. As described, processing plants, such as a processing plant embodying or including an oil refinery, may operate a plurality of assets to produce, or facilitate the production of, one or more products. For example, processing plants may operate various types of equipment such as boilers, furnaces, and dryers to produce the one or more products. Additionally, to facilitate the production of the one or more products, the processing plant may operate lighting systems and HVAC systems. The operation of these assets, and various other assets, of the processing plant may produce carbon emissions.

The method 300 for optimizing carbon emissions associated with the operation of the processing plant can include a step 310 of identifying, such as receiving or determining, a carbon output value associated with operating each asset of the plurality of assets of the processing plant. In various examples, the carbon output value can be, or can include, sensor data that measures the amount of carbon emissions that are emitted, such as directly emitted, from an asset. In various examples, the carbon output value can be, or can include, a calculated value and/or an estimated value of the amount of carbon emissions that is emitted from the asset. For example, for a high frequency furnace that uses gray hydrogen gas as a fuel source, the amount of gray hydrogen that is consumed by the high frequency furnace can be measured. As such, a calculated value and/or an estimated value of the amount of carbon emissions that is emitted from the high frequency furnace can be estimated based on the amount of gray hydrogen consumed by the furnace. Additionally, because gray hydrogen is derived from the combustion of fossil fuels, such as natural gas, an indirect estimated value of the amount of carbon emissions that is associated with the use of the gray hydrogen can be estimated and can be included in the carbon output value for the asset. In the example of the high frequency furnace that uses gray hydrogen gas as the fuel source, the carbon output value can include the amount of carbon emissions directly emitted by the asset (e.g., either measured by a sensor and/or estimated by the amount of gray hydrogen consumed by the furnace) and the amount of carbon emissions indirectly associated with the asset (e.g., an estimation of the carbon emissions that are associated with the production of the gray hydrogen that is consumed by the furnace).

The method 300 for optimizing carbon emissions associated with the operation of the processing plant can include a step 320 of identifying an impact value associated with each asset of the plurality of assets of the processing plant. The impact value associated with each asset can be, or can include, various costs associated with the particular asset. For example, the impact value associated with each asset can include a marginal abatement impact value, which can be, or can include, a marginal abatement cost for the asset. The marginal abatement cost can be the cost of reducing carbon emissions and the unit of measurement can be dollars per metric tons of carbon dioxide equivalent ($/MTCO2e). The impact value associated with each asset can include an operational impact value, which can be, or can include, an operational cost for the asset. The operational cost for the asset can be the cost to operate the asset in a certain time period (e.g., cost to operate the asset for a year, a quarter, a month, or a day). For example, the operational cost for the asset can include the cost of the required fuel and/or electricity to operate the asset in the certain time period and/or the cost to maintain the asset for the certain time period. The impact value associated with each asset can also include an asset alteration impact value, which can be, or can include, an asset alteration cost that is associated with the asset. The asset alteration cost can be, or can include, the cost to install, modify, replace, or renew the asset. The impact value associated with each asset can also include various other factors and/or costs, such as loss of opportunity costs, reputational costs, offset costs (e.g., cost of obtaining carbon offset products for the asset), interest costs, government/regulatory fees, and/or government/regulatory incentives.

The method 300 for optimizing carbon emissions associated with the operation of the processing plant can include a step 330 of generating an optimized set of transformation actions corresponding to the plurality of assets. As described herein, each transformation action can be, can be representative of, or can initiate an action that, if taken, may, or is expected to, reduce the carbon output value associated with operating a particular asset of the plurality of assets and/or of the processing plant, and/or may reduce the impact value associated with the particular asset of the plurality of assets and/or the processing plant.

In various examples, one or more of the transformation actions can be, or can include, generating a schedule, a work order, and/or a recommendation for installing, replacing, renewing, or modifying, such as upgrading, the asset. For example, one or more of the transformation actions can be the generation of a work order to replace a catalytic combustor, one or more of the transformation actions can be the recommendation to replace an asset that consumes fossil fuels with an asset that consumes electricity, and/or one of the transformation action can be the recommendation to install a carbon capture system onto an asset. In yet another example, one or more of the transformation actions can be the generation of a work order or the recommendation to install new equipment and/or technology including but not limited to carbon removal technologies like post-combustion carbon capture and methane measurement, detection, and leak mitigation technologies. Additionally, one or more of the transformation actions can be the generation of a schedule indicating when to replace the catalytic combustor, when to replace the asset that consumes fossil fuels with the asset that consumes electricity, and/or when to install the carbon capture system onto the asset.

In the example of installing the carbon capture system onto the asset, the carbon capture system may reduce carbon emissions by removing carbon dioxide from flue gas streams after combustion. In various example, the installation of the carbon capture system onto the asset may require the addition of new energy generation assets to power the carbon capture system if current power generation supply is being used for an existing asset.

In various examples, one or more of the transformation actions can be, or can include, generating a schedule, a work order, and/or a recommendation for converting an asset that operates on a non-renewable energy source to a renewable energy source. In various examples, one or more of the transformation actions can be, or can include, generating a schedule, a work order, and/or a recommendation for obtaining a carbon offset product, such as a carbon credit, for the operation of the processing plant to offset carbon emissions for the processing plant and/or for the operation of an asset to offset carbon emissions for the asset

In various examples, one or more of the transformation actions can be, or can include, generating a replacement schedule for an asset and/or one or more components of the asset. Also, the transformation action can include the automatic generation of work orders and/or purchase orders for the asset and/or one or more components of the asset to be replaced. For example, it may be beneficial to replace an asset and/or components of the asset at certain time intervals, such as predetermined time intervals or calculated time intervals, which can be based on usage. Purchase orders and/or work orders can be automatically generated. As a non-limiting example, it may be beneficial to replace catalytic combustors and/or absorbents, such as liquid solvents in absorber columns that absorb carbon emissions after combustion, at certain time intervals, such as every six months and/or after four-thousand hours of use.

In various examples, one or more of the transformation actions can be, or can include, generating a schedule, a work order, and/or a recommendation for changes and/or modifications, such as automatic changes and/or modifications to a process unit, such as a discrete process or a broader process change and/or modification for a diverse population of assets.

In various examples, one or more of the transformation actions can be automated. For example, the transformation actions can be communicated to the processing plant system 104, which can be a distributed control system (DCS), to change operational requirements and/or parameters. Additionally, or alternatively, one or more of the transformation actions can be communicated to the processing plant system 104 to incorporate and/or modify sensing and/or measurement metrics. Additionally, or alternatively, one or more of the transformation actions can be communicated to the processing plant system 104 to incorporate new and/or modify existing processes of the processing plant.

Generating the optimized set of transformation actions can be performed utilizing a multi-optimization model. Also, generating the optimized set of transformation actions can be based at least in part on the carbon output value associated with operating each asset of the plurality of assets from step 310 and the impact value associated with each asset of the plurality of assets from step 320.

The multi-optimization model can be a multi-variable model. In various examples, the multi-variable model can be a mixed integer programming (MIP) model, such as a mixed integer quadratically constrained programming (MIQCP) model, a mixed logical-linear programming (MLLP) model, or a mixed integer linear programming (MILP) model. The MIP model can be a mathematical optimization and/or feasibility model in which at least some of the variables (e.g., constraints and/or inputs such as the received carbon output value associated with operating each asset of the plurality of assets and/or the received asset impact value associated with each asset of the plurality of assets) are restricted to be integers, such as binary integers. In various examples, the multi-variable model can be a constraint programming (CP) model. In various examples, the multi-variable model can be a mathematical programming model.

The multi-optimization model can be a machine learning model. For example, the multi-optimization model can be a machine learning model that may encode at least some of the variables and may execute a machine learning algorithm. In various examples, the machine learning algorithm is a reinforcement learning algorithm, an unsupervised learning algorithm, and/or a supervised learning algorithm.

The multi-optimization model can utilize the carbon output value associated with operating each asset of the plurality of assets from step 310 and the impact value associated with each asset of the plurality of assets from step 320 as inputs and/or constraints into the model. Additionally, the multi-optimization model can utilize various other data points as input and/or constraints. For example, the multi-optimization model can utilize goals as inputs and/or constraints into the model such as a carbon emissions goal value and/or an impact value goal value. As another example, the multi-optimization model can use other data points such as location data, such as geographical location of the processing plant, domain data, social data, environmental data, legal data, regulatory data, economic data, risk tolerance data, infrastructure data, capital data, and/or market trends data as inputs and/or constraints into the model. As yet another example, the multi-optimization model can use technoeconomic analysis data as inputs and/or constraints into the model. The technoeconomic analysis data can be data output by an analysis of the economic performance of the operation of the assets of the processing plant and/or an analysis of the economic performance of the one or more products produced by the operation of the assets of the processing plant. As yet another example, the multi-optimization model can use target dates and/or time frames as inputs and/or constraints into the model (e.g., the carbon emissions goal value may be to achieve net zero carbon emissions within a time frame often years). As yet another example, the multi-optimization model can use government and/or regional subsidies, such as tax credits that are associated with carbon emissions and/or the use of bio-feedstocks. In various examples, the multi-optimization model can determine where the bio-feedstocks should be processed and/or what product should utilize the bio-feedstocks.

As yet another example, the multi-optimization model can use objectives and/or operating requirements as inputs and/or constraints into the model, which may change over time, to optimize the cumulative carbon output value and/or the optimized cumulative impact value associated with the operations of the plurality of assets of the processing plant. As a non-limiting example, an objective may be to achieve a net cumulative carbon output value associated with the operations of the plurality of assets or of the plant within a certain time-frame, such as within ten years, without the obtainment of carbon offset products within the certain time-frame. An additional objective may be to achieve the net cumulative carbon output value while also achieving the lowest marginal abatement impact value and the lowest asset alteration impact value possible. However, because technology, metrics, such as financial and energy metrics, regulatory requirements, and/or consumer requirements may change over time, the multi-optimization model allows for the adjustment of the optimizations. For example, the cost and availability of renewable energy, such as renewable electricity and green hydrogen, may continue to improve. As such, as the cost and availability of the renewable energy improves, the multi-optimization model can account for the reduced cost and increased availability and recommend the obtainment of and/or automatically obtain the renewable energy in lieu of the previously used non-renewable energy. In yet other examples, other factors, such as interest rates and/or government reporting requirements, may change over time, which can also be incorporated into the multi-optimization model's algorithms so that the it can be determined whether new or different transformation actions should be recommended or automatically performed to achieve objectives, such as the objective to achieve the net cumulative carbon output value associated with the operations of the plurality of assets or of the plant within the certain time-frame.

Generating the optimized set of transformation actions corresponding to the plurality of assets utilizing the multi-optimization model can include generating a plurality of scenarios for the optimized set of transformation actions. For example, a first scenario can include one or more transformation actions associated with one or more assets of the plurality of assets of the processing plant, and a second scenario can include one or more transformation actions associated with one or more assets of the plurality of assets of the processing plant. The second scenario can be different than the first scenario such that at least one of the transformation actions of the second scenario is different than at least one of the transformation actions of the first scenario. Additionally or alternatively, the second scenario can be different than the first scenario such that the one or more transformation actions of the first scenario are associated with at least one different asset than the one or more transformation action of the second scenario. Additionally or alternatively, the second scenario can be different than the first scenario such that an optimized cumulative carbon output value associated with the plurality of assets of the first scenario is different than an optimized cumulative carbon output value associated with the plurality of assets of the second scenario. In some embodiments, the multi-optimization model generates and/or selects a particular scenario that optimizes (e.g., maximizes, minimizes, or otherwise approaches a preferred value) any number of optimization parameters based at least in part on the constraints, input data, and/or the like.

Generating the plurality of scenarios for the optimized set of transformation actions can be done in real-time or in near real-time. For example, the first scenario can be generated in real-time or in near real-time with the generation of the second scenario. Additionally, a relatively large number of scenarios may be generated in real-time or in near real-time. More specifically, more than five scenarios, such as more than ten scenarios, such as more than one hundred scenarios, such as more than one thousand scenarios, such as more than ten thousand scenarios, can be generated within a relatively short time frame, such as within a week, such as within a day, such as within an hour, such as within five minutes. As will be appreciated, generating a great number of scenarios, all within a relatively short time frame, is impossible to do with the human mind and/or with existing methods. Additionally, as described, the processing plant may have a great number of assets. The great number of assets can each correspond to the relatively large number of scenarios. Therefore, generating the great number of scenarios that correspond to the relatively large number of scenarios is impossible to do with the human mind and/or with existing methods.

As used herein, the phrase "optimized cumulative carbon output value associated with the plurality of assets" refers to the expected, calculated, measured, and/or determined cumulative carbon output value associated with the plurality of assets of the processing plant after the action that is associated with the one or more transformation actions is performed. As used herein, the phrase "optimized cumulative impact value associated with the plurality of assets" refers to the expected, calculated, and/or determined cumulative impact value associated with the plurality of assets of the processing plant after the action that is associated with the one or more transformation actions is performed. As used herein, the phrase "current cumulative carbon output value associated with the plurality of assets" refers to the expected, calculated, measured, and/or determined cumulative carbon output value associated with the plurality of assets of the processing plant before the action that is associated with the one or more transformation actions is performed. As used herein, the phrase "current cumulative impact value associated with the plurality of assets" refers to the expected, calculated, and/or determined cumulative impact value associated with the plurality of assets of the processing plants before the action that is associated with the one or more transformation actions is performed.

After the first scenario and the second scenario are generated, the first scenario and the second scenario can be compared, such as automatically compared, utilizing the multi-optimization model. The first scenario and the second scenario can be compared based on certain criteria, variables, constraints, preferences, inputs, etc. For example, the first scenario and the second scenario can be compared based on an optimized cumulative carbon output value associated with the plurality of assets and a carbon emissions goal value, such as a cumulative carbon emissions goal value for the plurality of assets. Based on the comparison, it can be determined if either of the first scenario or the second scenario has an optimized cumulative carbon output value that is below the cumulative carbon emissions goal value. Additionally or alternatively, it can be determined which of the first scenario or the second scenario has a lower optimized cumulative impact value and/or optimized cumulative carbon output value. Based on the determinations, the transformation actions within the scenario that has the lower optimized cumulative impact value and/or the lower optimized cumulative impact value and/or the cumulative carbon output value that is below the cumulative carbon emissions goal value can be selected, recommended, performed, such as automatically performed and/or initiated, such as automatically initiated.

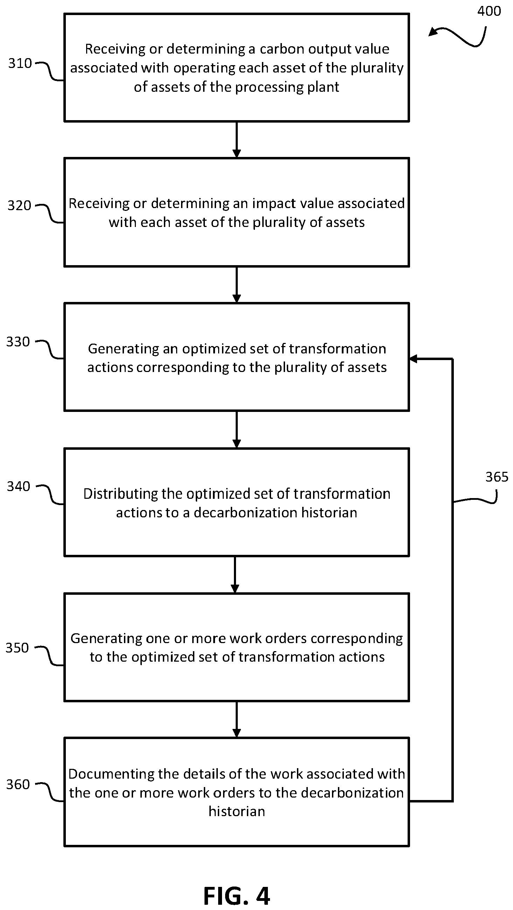

Referring now to FIG. 4, a flow chart of a method 400 for reducing carbon emissions for a plurality of assets of a processing plant, such as a processing plant embodying or including an oil refinery, in accordance with an example embodiment of the present disclosure is shown. The method 400 can include the step 310, the step 320, and the step 330 as previously described in relation to method 300. However, the method 400 can also include a step 340 of distributing the optimized set of transformation actions to a decarbonization historian. For example, the optimized set of transformation actions can be documented within and/or saved to the decarbonization historian and a work order can be generated and sent, such as automatically sent to the processing plant system 104 to schedule and perform the one or more actions associated with the optimized set of transformation actions, in step 350 of method 400. In various examples, the work order can be sent to the processing plant's enterprise resource planning (ERP) system to schedule and perform the one or more actions associated with the optimized set of transformation action.

As described, each transformation action can be, can be representative of, or can initiate an action that, if taken, may, or is expected to, reduce the carbon output value associated with operating a particular asset of the plurality of assets or of the processing plant and/or may reduce the impact value associated with the particular asset of the plurality of assets and/or the processing plant. Once the one or more actions corresponding to the optimized set of transformation actions is performed and/or completed, the details of the one or more actions can be documented into the decarbonization historian, in step 360 of method 400. For example, the details of a completed work order associated with the action corresponding to the transformation action can be saved into the decarbonization historian. The details of the completed work order can include information that is related to the action or to the asset. For example, the details of the completed work order can include the date and time the work was started and/or completed, the personnel and/or vendor who completed the work, the carbon output value of the asset prior to the work being completed, the carbon output value of the asset after the work is completed, the cost of the labor associated with the action, the cost of the components installed on the asset, etc.

In various examples, once the one or more actions corresponding to the optimized set of transformation actions is performed and/or completed, the details of the one or more actions can be used in the multi-optimization model to generate a subsequent optimized set of transformation actions, which is illustrated as feedback loop 365 of method 400. For example, details regarding the carbon output value associated with operating the asset after the transformation is performed and/or completed can be subsequently used in the multi-optimization model to generate the subsequent optimized set of transformation actions. Additionally, or alternatively, details regarding the impact value associated with the asset after the transformation action is performed and/or the impact value associated with the transformation action can be saved into the decarbonization historian and/or the ERP system and subsequently used in the multi-optimization model to generate the subsequent optimized set of transformation actions. In various examples, an actual asset alteration impact value associated with asset is used in the multi-optimization model to generate the subsequent optimized set of transformation actions. In this way, the more the multi-optimization model is used in conjunction with the decarbonization historian and/or the ERP system, the more accurate the inputs into the multi-optimization may become. Therefore, using the decarbonization historian in conjunction with the multi-optimization model may increase the accuracy and/or effectiveness of the multi-optimization model.

Even though examples have been provided that optimize the scenarios and corresponding transformation actions utilizing the multi-optimization model based on the optimized cumulative carbon output value associated with the plurality of assets and/or the optimized cumulative impact value associated with the plurality of assets, other constraints and preferences are contemplated. For example, the scenarios can be optimized based on minimizing capital investment, minimizing capital expenditures (CapEx), minimizing operational expenditures (OpEx), minimizing risk, minimizing time frames for completion of the action associated with the corresponding transformation action, maximizing regulatory compliance, etc. In some embodiments, the multi-optimization model optimizes a plurality of target parameters in real-time or in near real-time based at least in part on weights applied to such target parameters.

Additionally, or alternatively, the multi-optimization model can be based, at least partially, on accounting for negative implications of transformation actions. For example, negative implications can include a variance in product quality, yield, planned and unplanned equipment and/or processing plant downtime, and unplanned release of carbon emissions.

Additionally, or alternatively, the multi-optimization model can be based, at least partially, on optimizing start-up and shut-down procedures of the processing plant as a result of the planned and unplanned equipment and/or processing plant downtime. Optimizing the start-up and shut-down procedures of the processing plant may impact carbon emissions as it relates to turnarounds during the processes.

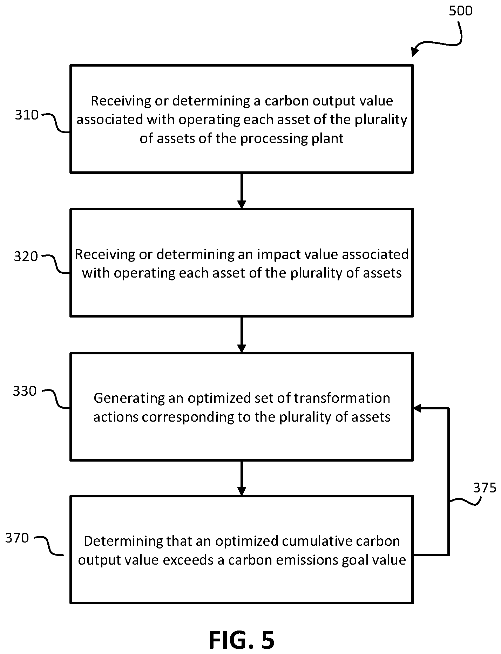

Referring now to FIG. 5, a flow chart of a method 500 for reducing carbon emissions for a plurality of assets of a processing plant in accordance with an example embodiment of the present disclosure is shown. The method 500 can include the step 310, the step 320, and the step 330 as previously described in relation to method 300. Also, or alternatively, even though not shown, the method 500 can include the step 30, the step 350, and/or the step 360 of method 400.

Referring still to FIG. 5, the method 500 can include a step 370 of determining that an optimized cumulative carbon output value exceeds a carbon emissions goal. In response to determining that the optimized cumulative carbon output value exceeds the carbon emissions goal, an optimized set of transformation actions can be generated in step 330, which is depicted as feedback loop 375.

Determining whether an optimized cumulative carbon output value exceeds a carbon emissions goal value can be done in real-time or in near real-time with generating the optimized set of transformation actions. In this way, the optimized cumulative carbon output value can be monitored, either constantly or at a cadence, and when the optimized cumulative carbon output values exceeds the carbon emissions goal value, a new optimized set of transformation actions can be generated to reduce the cumulative carbon output value associated with the processing plant or the assets.

Various factors may cause the previously optimized cumulative carbon output value to exceed a carbon emissions goal value. For example, inputs or constraints may change over time. For example, the carbon emissions goal value may change. Also, assets may deteriorate over time, which may cause a change in the cumulative carbon output value to increase. For example, the effectiveness of a catalytic combustor or a carbon capture system may decrease over time. As such, it may be beneficial to monitor the effectiveness of these assets and make adjustments with the multi-optimization model to generate a new optimized set of transformation actions. In a non-limiting example, the asset can be a furnace and the health of the furnace can be monitored. For example, the health of the furnace, or the health of a burner of the furnace, can be monitored by a sensor and/or periodically inspected. The information from the sensors and/or inspections can be used by the decarbonization historian and/or the ERP system to replace components and/or make adjustments to the furnace. For example, adjustments to the temperature profile and/or adjustment for flame control can be made to optimize excess oxygen.

In various examples, the decarbonization historian and/or the ERP system can be used to determine whether the inputs and/or constraints into the multi-optimization model have changed and, in response to the inputs and/or constraints changing, a new optimized set of transformation actions can be generated. Stated differently, various factors (e.g., inputs and/or constraints into the multi-optimization model) may cause the previously optimized plurality of assets to no longer be a best-case-scenario; therefore, the optimizations may be regenerated to generate a new optimized plurality of assets. For example, the cost of a renewable energy source may change, and/or the cost of obtaining a carbon offset product may change. As such, other transformation actions other than the obtainment of a renewable energy source and/or the obtainment of a carbon offset product may be better, or vice-versus. For example, as the cost of renewable electricity decreases and the cost of fossil fuels increases, it may become more beneficial to replace fuel powered equipment with electric powered equipment and power the electric powered equipment with renewable electricity. As another example, as the cost of carbon offset products increases, it may become more beneficial to reduce the amount of carbon offset products obtained, but to instead perform other transformation actions, such as installing carbon capture equipment, to reduce carbon emissions. In this way, data from the ERP system and/or decarbonization historian can be monitored, either constantly or at a cadence, to determine whether the currently optimized plurality of assets are the best-case scenario. If they are not, the multi-optimization model can be used to generate a new optimized set of transformation actions.

### Example Implementations of the Methods of the Disclosure

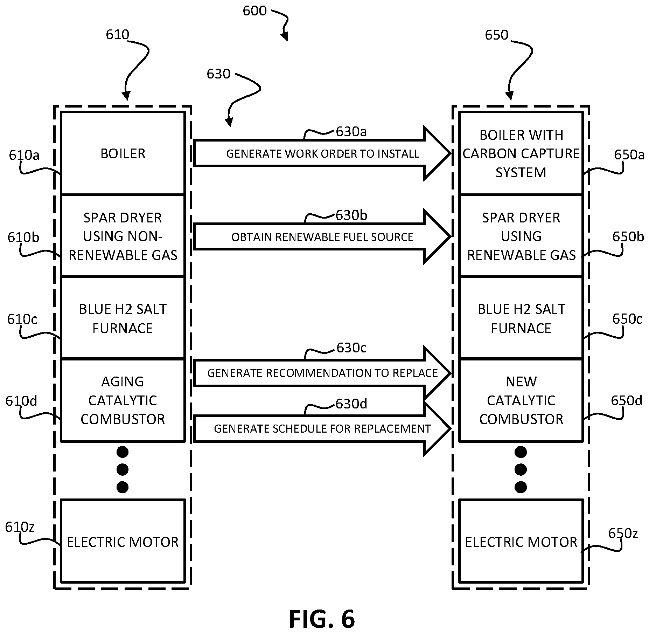

FIG. 6 illustrates an implementation of the method 300 of FIG. 3 for optimizing carbon emissions associated with an operation of a processing plant that includes a plurality of assets 610 in accordance with an example embodiment of the present disclosure. In this example, the plurality of assets 610 includes a multitude of assets, including a first asset 610a, a second asset 610b, a third asset 610c, a fourth asset 610d, and a last asset 610z. In this example, the first asset 610a is a boiler, the second asset 610b is a spar dryer, the third asset 610c is a salt furnace, the fourth asset 610d is a catalytic combustor, and the last asset 610z is an electric motor. However, it should be understood that any number of assets, including just one, are contemplated and any variety of different assets are contemplated.

As described, generating the optimized set of transformation actions 630 can be generated based on various scenarios 600. The example of FIG. 6 depicts one of the scenarios 600. At least one of the plurality of assets 610 of the scenario 600 can correspond to a transformation action of an optimized set of transformation actions 630. In this example, the first asset 610a corresponds to a first transformation action 630a, the second asset 610b corresponds to a second transformation action 630b, the fourth asset 610d corresponds to both a third transformation action 630c and a fourth transformation action 630d. Also, in this example, the third asset 610c and the last asset 610z correspond to a `no action' transformation action (not depicted).

Referring still to FIG. 6, each of the assets of the optimized set of transformation actions 630 can be associated with a corresponding optimized plurality of assets 650. As used herein, the term "optimized plurality of assets" refers to a representation of, or is, the plurality of assets 610 after at least one transformation action of the optimized set of transformation actions 630 is performed. For example, in the example of FIG. 6, the first asset 610a is a boiler and the corresponding first transformation action 630a is to generate a work order to install a carbon capture system onto the boiler. The corresponding optimized asset 650a is a boiler with a carbon capture system installed onto it, or a representation thereof.

Also in this example, the second asset 610b is a spar drying that is using a non-renewable gas. The corresponding second transformation action 630b is to obtain, such as automatically obtain, a renewable fuel source instead of a non-renewable fuel source. The optimized asset 650b is a spar dryer using renewable gas, or a representation thereof. Notably, a physical change to the second asset 610b may not be necessary. Instead, just a change to the fuel may, at least partially, reduce the optimized cumulative carbon output value associated with the plurality of assets and/or reduce the optimized cumulative impact value associated with the plurality of assets.

Still referring to FIG. 6, the fourth asset 610d of the plurality of assets 610 may correspond to both the third transformation action 630c and the fourth transformation action 630d. The third transformation action 630c, in this example, is to generate a recommendation to replace the third asset 610c; the fourth transformation action 630d, in this example, is to generate a schedule for the replacement of the third asset 630c. The corresponding optimized asset 650d is, or is a representation of, a new catalytic combustor. Additionally, the optimized asset 650d is associated with a schedule as to when the asset 610d should be replaced.

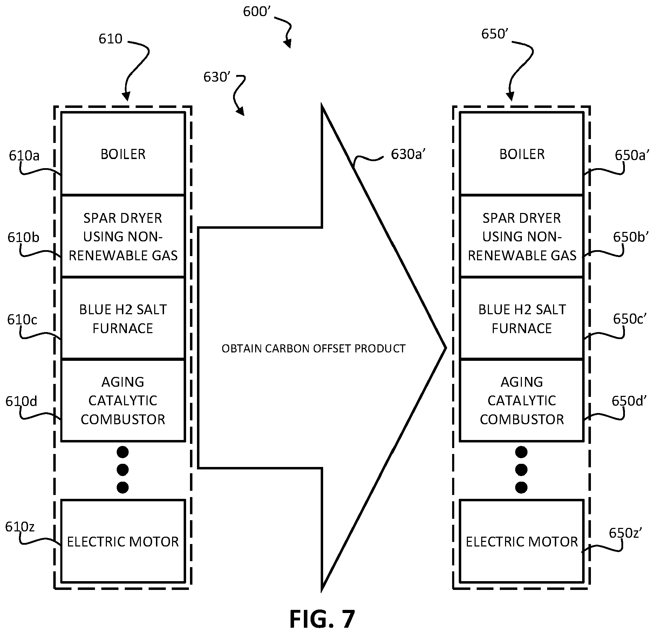

Referring now to FIG. 7, an example implementation of the method 300 of FIG. 3 for reducing carbon emissions associated with an operation of a processing plant, such as a processing plant embodying or including an oil refinery, that includes a plurality of assets 610 is illustrated, in accordance with an example embodiment. The illustration of FIG. 7 can illustrate a scenario 600' that includes an optimized set of transformation actions 630' that can be generated based on the scenario 600'. In this example, each of the plurality of assets 610 are associated with a first transformation action 630a' and a `no action' transformation action (not shown). The transformation action 630a' in this example is to obtain a carbon offset product, such as a carbon credit, for the operation of all of the plurality of assets 610. The corresponding optimized plurality of assets 650' remains physically unchanged from the plurality of assets 610. However, because the carbon offset products are, or will be, obtained, either the optimized cumulative carbon output value associated with the optimized plurality of assets 650' is less than the current cumulative carbon output value associated with the plurality of assets 610, and/or the optimized cumulative impact value associated with the optimized plurality of assets 650' is less than the current cumulative asset impact value associated with the plurality of assets 610. Additionally, the cumulative carbon output value directly emitted by the plurality of assets 610 of the processing plant remains unchanged. However, due to the obtainment of the carbon offset product, the cumulative carbon output value indirectly emitted by the plurality of assets of the processing plant is reduced, or is expected to be reduced, after the carbon offset product is obtained. Therefore, in this example, the optimized cumulative asset impact value is based at least in part on the optimized set of transformation actions 630a'. Additionally, because the obtainment of carbon offset product may reduce government fees, the optimized cumulative asset impact value is based at least in part on the optimized set of transformation actions 630'.

Even though only various examples of scenarios 600, 600' have been illustrated, other examples of scenarios 600 are contemplated. For example, a scenario 600 can include a detailed schedule of when one or more actions associated with the optimized set of transformation actions 630a are to be performed. The schedule, which can be generated by the multi-optimization model, can include start dates, end dates, expected impact values for the optimized plurality of assets 650' for various time frames, etc. Additionally, the optimizations performed by the multi-optimization model can accommodate for preferences, constraints, and goals. For example, the multi-optimization model can generate a schedule that maintains the optimized cumulative impact value below a threshold value for each year while also achieving a carbon emissions goal value within a certain time frame. In various examples, the multi-optimization model can generate a schedule that maintains the asset alteration impact value below a threshold value for each year while also achieving a zero-emissions goal value within a certain time frame.

### Conclusion

The above descriptions of various embodiments of the subject disclosure and corresponding figures and what is described in the Abstract, are described herein for illustrative purposes, and are not intended to be exhaustive or to limit the disclosed embodiments to the precise forms disclosed. It is to be understood that one of ordinary skill in the art may recognize that other embodiments having modifications, permutations, combinations, and additions can be implemented for performing the same, similar, alternative, or substitute functions of the disclosed subject matter, and are therefore considered within the scope of this disclosure. Therefore, the disclosed subject matter should not be limited to any single embodiment described herein, but rather should be construed in breadth and scope in accordance with the appended claims below. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1. A computer-implemented method for optimizing carbon emissions associated with an operation of a processing plant, the processing plant comprising a plurality of assets, the computer-implemented method comprising:
identifying a carbon output value associated with operating each asset of the plurality of assets of the processing plant;
identifying an impact value associated with each asset of the plurality of assets, wherein the impact value associated with each asset comprises at least one of:
a marginal abatement impact value associated with the asset;
an operational impact value associated with operating the asset; or
an asset alteration impact value associated with the asset; and
generating an optimized set of transformation actions corresponding to the plurality of assets utilizing a multi-optimization model based at least in part on (i) the carbon output value associated with operating each asset of the plurality of assets, and (ii) the impact value associated with each asset of the plurality of assets,
wherein at least one of:
(i) an optimized cumulative carbon output value associated with the operations of the plurality of assets is less than a current cumulative carbon output value associated with the plurality of assets, wherein the optimized cumulative carbon output value is further based at least in part on the optimized set of transformation actions, or
(ii) an optimized cumulative impact value associated with the operations of the plurality of assets is less than a current cumulative asset impact value associated with the plurality of assets, wherein the optimized cumulative impact value is further based at least in part on the optimized set of transformation actions.

2. The computer-implemented method of claim 1, further comprising identifying a carbon emissions goal value, wherein the optimized cumulative carbon output value is less than the carbon emissions goal value.

3. The computer-implemented method of claim 2, further comprising:
determining the carbon emissions goal value based at least in part on a geographical location of the processing plant.

4. The computer-implemented method of claim 1, wherein the generating the optimized set of transformation actions further comprises minimizing the optimized cumulative impact value associated with the plurality of assets.

5. The computer-implemented method of claim 1, wherein the generating the optimized set of transformation actions further comprises minimizing the optimized cumulative carbon output value associated with the plurality of assets.

6. The computer-implemented method of claim 1, further comprising:
determining the optimized cumulative carbon output value associated with the plurality of assets, wherein the generating the optimized set of transformation actions is in response to the optimized cumulative carbon output value exceeding a carbon emissions goal value.

7. The computer-implemented method of claim 6, wherein the generating the optimized set of transformation actions comprises generating the optimized set of transformation actions in real-time or in near real-time with the determining the optimized cumulative carbon output value associated with the plurality of assets.

8. The computer-implemented method of claim 1, wherein the optimized set of transformation actions comprises a transformation action to generate a schedule for installing, replacing, renewing, or modifying at least one asset of the plurality of assets.

9. The computer-implemented method of claim 1, wherein the optimized set of transformation actions comprises:
a first transformation action to generate a schedule for installing, replacing, renewing, or modifying a first asset of the plurality of assets; and
a second transformation action to generate a recommendation to install, replace, renew, or modify the first asset of the plurality of assets.

10. The computer-implemented method of claim 1, wherein the optimized set of transformation actions comprises at least one of:
a transformation action to generate a recommendation to install, replace, renew, or modify at least one asset of the plurality of assets;
a transformation action to automatically generate a work order to install, replace, renew, or modify at least one asset of the plurality of assets;
a transformation action to convert received electricity to operate at least one asset of the plurality of assets from a non-renewable energy source to a renewable energy source;
a transformation action to convert at least one asset of the plurality of assets to operate with green hydrogen; or
a transformation action to obtain a carbon credit offset for an operation of at least one asset of the plurality of assets.

11. The computer-implemented method of claim 1, further comprising:
performing at least one transformation action of the optimized set of transformation actions on at least one asset of the plurality of assets; and
generating a time stamp of when the at least one transformation action was performed on the at least one asset of the plurality of assets.

12. The computer-implemented method of claim 1, wherein generating the optimized set of transformation actions comprises generating a first scenario for the optimized set of transformation actions in real-time or in near real-time with generating a second scenario for the optimized set of transformation actions,
wherein the first scenario comprises a first transformation action associated with a first asset of the plurality of assets,
wherein the second scenario comprises a second transformation action, different than the first transformation action, that is associated with a second asset of the plurality of assets, and
wherein the computer-implemented method further comprises performing the first transformation action or the second transformation action, but not both.

13. The computer-implemented method of claim 1, wherein generating the optimized set of transformation actions comprises generating a first scenario for the optimized set of transformation actions in real-time or in near real-time with generating a second scenario for the optimized set of transformation actions,
wherein the first scenario comprises a first transformation action associated with a first asset of the plurality of assets,
wherein the second scenario comprises a second transformation action, different than the first transformation action, that is associated with the first asset of the plurality of assets, and
wherein the computer-implemented method further comprises performing the first transformation action or the second transformation action, but not both.

14. An apparatus comprising at least one processor and at least one memory, the at least one memory including program code, the at least one memory and the program code configured to, with the at least one processor, cause the apparatus to:
receive or determine a carbon output value associated with operating each asset of a plurality of assets of a processing plant;
receive or determine an impact value associated with each asset of the plurality of assets, wherein the impact value associated with each asset comprises at least one of:
a marginal abatement impact value associated with the asset;
an operational impact value associated with operating the asset; or
an asset alteration impact value associated with the asset; and
generate an optimized set of transformation actions corresponding to the plurality of assets utilizing a multi-optimization model based at least in part on (i) the carbon output value associated with operating each asset of the plurality of assets, and (ii) the impact value associated with each asset of the plurality of assets,
wherein at least one of:
(i) an optimized cumulative carbon output value associated with the operations of the plurality of assets is less than a current cumulative carbon output value associated with the plurality of assets, wherein the optimized cumulative carbon output value is further based at least in part on the optimized set of transformation actions, or
(ii) an optimized cumulative impact value associated with the operations of the plurality of assets is less than a current cumulative asset impact value associated with the plurality of assets, wherein the optimized cumulative impact value is further based at least in part on the optimized set of transformation actions.

15. The apparatus of claim 14, wherein the at least one memory and the program code are further configured to, with the at least one processor, cause the apparatus to receive or determine a carbon emissions goal value, wherein the optimized cumulative carbon output value is less than the carbon emissions goal value.
